# EUROPEAN PATENT APPLICATION

(11) **EP 1 111 873 A2**
(43) Date of publication of application: **27.06.2001**
(21) Application number: 00650209.0
(22) Date of filing: 18.12.2000
(51) Int. Cl.: H04L 29/06, H04L 9/00

(54) **Method and apparatus for public key management**

(30) Priority: 23.12.1999 US 471554
(71) Applicant: Nortel Networks Limited, Montreal, Quebec H2Y 3Y4 (CA)
(72) Inventor: Hardjono, Thomas, Arlington, MA 02476 (US)
(74) Representative: Coyle, Philip Aidan

(57) **Abstract**

A method and an apparatus for delivering security keys to domain entities through the use of management keys.

## Description

### BACKGROUND

This invention relates to a key management system for deploying and rekeying of keys in a network domain for control-packet authentication.

A public key used in only one domain is called a semi-public key, as opposed to a fully-public key which is used globally. Whether a system employs semi-public keys or fully-public keys, inherent in a key management system is the need for a key exchange protocol. It is standard protocol for two devices that need to exchange a public key to first establish a temporary key for encrypting a session key. All subsequent communications use the session key for encryption or authentication. Essentially the temporary key serves the purpose of hiding the session key.

In a protocol-independent multicast domain ("PIM-domain"), in particular a PIM sparse mode domain ("PIM-SM domain"), a domain key distributor DKD serves the functions of generating and disseminating public keys. A domain key distributor DKD has the administrative responsibility of deploying certain public keys for control-packet authentication or encryption in the PIM-domain. Through the dissemination of keys to appropriate domain entities, a level of security can be achieved. For example, all routers within the domain can use the same shared symmetric/private key "Keq", also known as the "equal opportunity key," for all PIM messages. Once a router gains the shared key Keq, the router has the ability to conduct any PIM actions. Therefore, the "Keq" key should be disseminated in a way that only routers within the domain receive a copy of it.

### SUMMARY

Some networks may be sensitive to the potential impact of a security breach, and need additional keys to restrict the set of routers that are configured to become a bootstrap router (BSR) or a rendez-vous point (RP). A bootstrap router (BSR) sends authoritative group_to_rendez-vous point RP mappings to all other routers in the PIM domain. If PIM routers accept bootstrap messages from non-authorized candidate bootstrap routers (BSR's), such messages can potentially disrupt multicast routing for the entire PIM domain.

Candidate rendez-vous points RP's send candidate rendez-vous point RP advertisement messages to the bootstrap router (BSR). The bootstrap router (BSR) needs to avoid advertising inaccurate or false group-to-rendez-vous point RP mappings, which can lead to unpredictable routing states.

Therefore, the candidate bootstrap routers (BSR's) and rendez-vous point RP's use two unique keys to protect bootstrap and the candidate rendez-vous point RP advertisement messages. All bootstrap routers (BSR's) own an identical RSA key pair, and use the private key to "sign" bootstrap messages. The other routers only have the public key to verify the signature and thus be assured that the bootstrap message was indeed originated from one of the candidate bootstrap routers (BSR's). The keys in the key pair are the private bootstrap router key "Skbsr", and the public bootstrap router key "Pkbsr." All rendez-vous point RP's and bootstrap routers (BSR's) share another public key, the rendez-vous point RP key "Krp." No other routers in the domain has this key. This key, also called the "rendez-vous point key," is used to differentiate the capabilities of the different classes of routers in the network. For example, for a candidate rendez-vous point RP advertisement, the digest created from the message is only circulated with the rendez-vous point RP key, and only authorized candidate rendez-vous point RP's can advertise their candidacy to the bootstrap routers (BSR's).

An embodiment of the invention provides a key management system. The key management system is used to deploy the equal opportunity key, Keq, and the rendez-vous point key, Krp, to appropriate routers in the domain in a manner that ensures that unauthorized routers will not participate in protocol actions.

This management system permits disseminating a set of key management keys through a secured channel. The set of management keys is used for delivering and rekeying the "Krp" and the "Keq" keys. Essentially the key management keys serve the purpose of hiding the Krp and the Keq. This method is simple and effective in preventing unauthorized routers from participating in protocol actions.

### INVENTION SUMMARY

The invention provides a system for managing a plurality of keys as claimed in claim 1.

In a further aspect the invention provides a method of managing and delivering keys as claimed in claim 11.

In general, in one aspect, the invention features a system for managing a plurality of keys within a domain for sender authentication. The method includes a domain key distributor DKD for producing the plurality of keys, including key management keys, a rendez-vous point key "Krp", and an equal opportunity key "Keq", within the domain. A bootstrap router BSR has a private key/public key pair (Skbsr, Pkbsr) and that receives the "Keq" key and the "Krp" key from the domain key distributor DKD through the key management keys. A rendez-vous point RP receives the Keq and the Krp from the domain key distributor DKD through the key management keys, and shares the Krp with only the bootstrap router.

The implementation of the invention may include one or more of the following. The bootstrap router BSR may sign a bootstrap message by using the Skbsr key. The rendez-vous point RP may advertise its candidacy to the bootstrap router BSR by signing a bootstrap message with the Krp key. The Krp key and the Keq key may be rekeyed periodically.

In another aspect, the invention is directed to a system of keys, generated within a domain by a domain key distributor DKD, for authenticating sender information. A private key/pubic key pair (Pkbsr, Skbsr) with the Pkbsr key is delivered to all routers in the domain through a plurality of key management keys, and the Skbsr is delivered only to a plurality of bootstrap routers BSR's. A Krp key is delivered to a plurality of rendez-vous points RP's and the plurality of bootstrap routers BSR's through the plurality of key management keys. A Keq is delivered to all routers in the domain through the plurality of key management keys.

The plurality of key management keys may consist of a key pair of the domain key distributor (Pkdkd, Skdkd), and another key pair (Pkrpbsr, Skrpbsr) generated by the domain key distributor. Pkrpbsr may be configured into the plurality of rendez-vous points RP's and the plurality of bootstrap routers BSR's. The Krp may be rekeyed and redelivered to the plurality of rendez-vous points RP's and the plurality of BSR's through the plurality of key management keys. The Keq may be rekeyed and redelivered to all routers in the domain through the plurality of key management keys.

In another aspect, the invention is directed to a method of managing and delivering a plurality of keys in a domain. The method is generating a first public/private key pair (Pkdkd, Skdkd), a second public/private key pair (Pkrpbsr, Skrpbsr), and a third public/private key pair (Pkbsr, Skbsr). Configures the Pkdkd key into all routers in the domain, and the key pair (Pkbsr, Skbsr) into a plurality of bootstrap routers BSR's in the domain, the Pkrpbsr key into the plurality of BSR's and a plurality of rendez-vous points RP's in the domain. Delivers the Pkbsr key to all routers in the domain by using the Skdkd, a Krp key to the plurality of BSR's and Rendez-vous point RP's by using the Skrpbsr key, and a Keq key to all routers in the domain by using the Skdkd key. The method may consist of rekeying and redelivering the Krp key to the plurality of BSR's and Rendez-vous point RP's on a periodic basis. The method may generate a ciphertext Crp by encrypting a rekeyed Krp' key with the Skdkd key, a ciphertext CCrp by encrypting the Crp with the Krp key, and may send the CCrp to all routers in the domain. Sending the ciphertext CCrp may multicast the ciphertext CCrp to the routers. The method may consist of rekeying and redelivering the Keq key to all routers in the domain on a periodic basis. Redelivering may generate a digest for a rekeyed Keq' key with Skdkd key, a ciphertext CCeq by encrypting the Keq' key and the digest with the Keq key, and may send the CCeq to all routers in the domain. Sending the CCeq may consist of unicasting the ciphertext CCeq to each of the routers.

In another aspect, the invention is directed to a method of managing and delivering a plurality of security keys in a domain. The method includes generating a plurality of management keys, configuring the plurality of management keys into a plurality of domain entities, and delivering the plurality of security keys by using the plurality of management keys.

The method may configure the plurality of management keys by manual configuration. The plurality of management keys may be configured by on-line dynamic configuration. The plurality of security keys may be rekeyed periodically.

### BRIEF DESCRIPTION OF THE DRAWING

FIG. 1 is an overview diagram for delivery of key management keys to different domain entities through a secure channel.

FIG. 2 is a diagram of the keys delivered to the various domain entities after the bootstrapping key management process.

FIG. 3 illustrates the process of delivering public key Pkbsr from the domain key distributor DKD to all domain routers.

FIG. 4 illustrates the process of delivering rendez-vous point key Krp from the domain key distributor DKD to all rendez-vous points RP's and bootstrap routers BSR's.

FIG. 5 process of delivering equal opportunity key Keq from the domain key distributor DKD to all domain routers.

FIG. 6 is a flow diagram detailing the steps of rekeying Krp.

FIG. 7 is a flow diagram detailing the steps of rekeying Keq.

### DETAILED DESCRIPTION

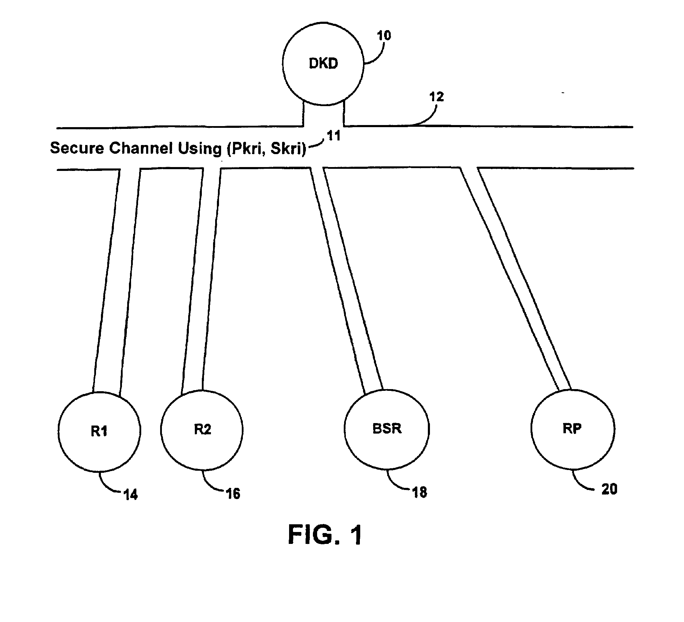

Referring to FIG. 1, a bootstrapping key management system is shown. Assuming that the bootstrap process is a dynamic on-line configuration based on a secure channel 12 opened between domain key distributor DKD 10 and PIM entity routers R1 14, R2 16, bootstrap router BSR 18, and rendez-vous point RP 20. The secure channel 12 can be established by a global public key pair (Pkri, Skri) 11, which may be manually configured or loaded through a smartcard or a flash card. Through this public key pair 11, router 14, and router 16, together with a bootstrap router BSR 18, and rendez-vous point RP 20 establish a security association and a secure channel with the domain key distributor (DKD) 10.

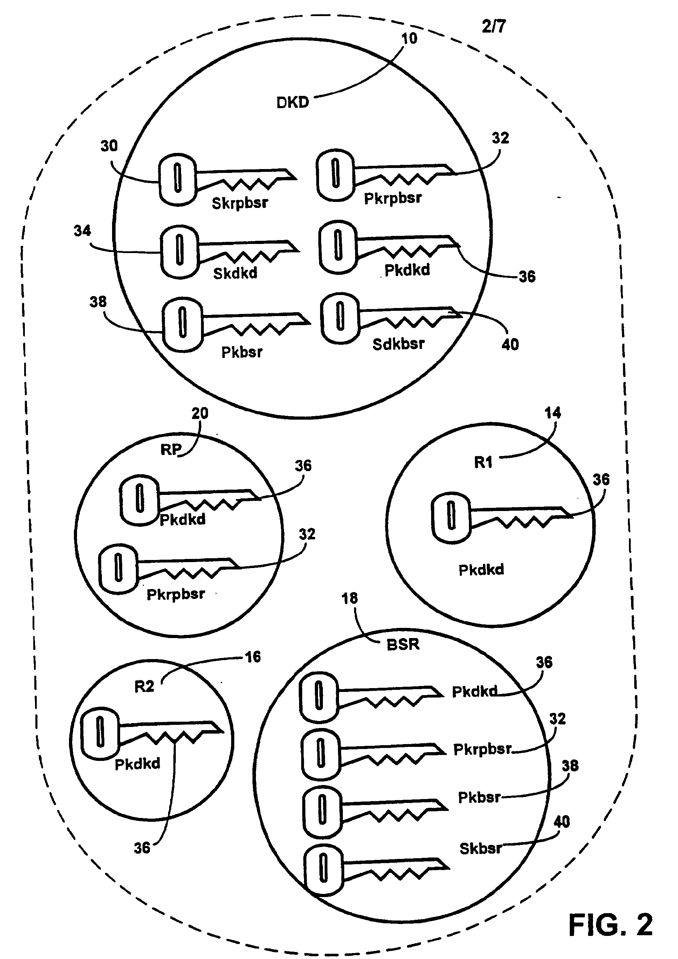

Referring to FIG. 2, management keys are shown reside in different domain entities after configuration. Initially, the domain key distributor DKD 10 is assigned the Rivest-Shamir-Adleman ("RSA") key pair "private key/public key of the domain key distributor" ( herein Pkdkd 36, Skdkd 34). The RSA technique is a highly-secure cryptography method provided by RSA Data Security of Redwood City, California. Routers, (including R1 14, R2 16, bootstrap router BSR 20, and rendez-vous point PR 20 in the domain) download a copy of the public key Pkdkd 36 of domain key distributor (DKD) 10 through secure channel 12 which they individually established with domain key distributor (DKD) 10.

The domain key distributor DKD 10 generates a key pair public/secret rendez-vous/bootstrap router pair (herein Pkrpbsr, Skrpbsr). Domain key distributor DKD 10 alone keeps the private key Skrpbsr 30, and rendez-vous point RP 20 downloads a copy of the public key Pkrpbsr 32 through the secure channel 12.

The domain key distributor DKD 10 also generates the pair of keys(Pkbsr 38, Skbsr 40). The bootstrap router BSR 20 downloads both the public key Pkbsr 38 and the private key Skbsr 40 from the domain key distributor DKD 10 through the secure channel 12. Alternatively, the bootstrap router BSR 20 generates Pkbsr 38 and Skbsr 40, and uploads a copy of the Pkbsr 38 to the domain key distributor 10 through the secure channel 12. In addition, the bootstrap router BSR 20 also downloads a copy of the public key Pkrpbsr 32 through the secure channel 12.

Alternatively, this bootstrapping process can be done manually. For example, the key Pkdkd 36 of the domain key distributor (DKD) 10 is manually configured in all routers, including R1 14, R2 16, rendez-vous point RP 20, and bootstrap router BSR 18.

After configuring the set of management keys shown in FIG. 2 into the appropriate routers in the domain, the key Pkbsr 38 is disseminated to all routers, including bootstrap routers and rendez-vous points, by using management keys configured into the various routers in FIG. 1.

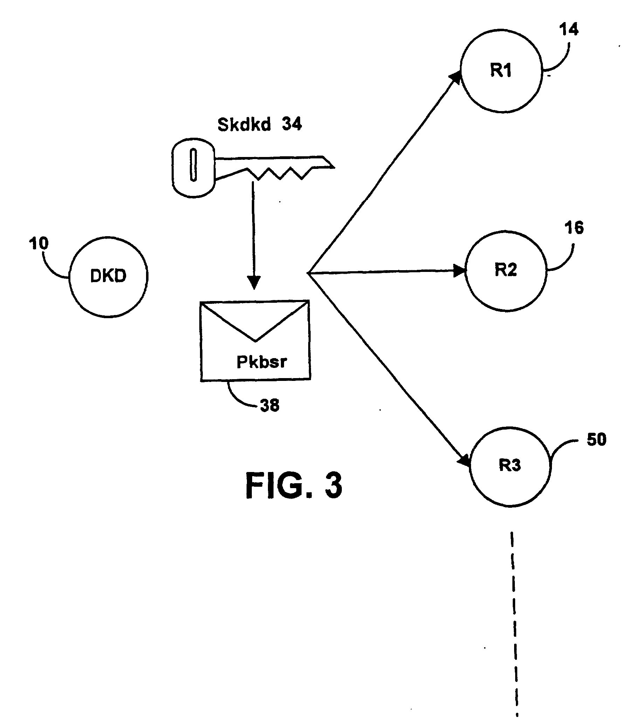

Referring to FIG. 3, the domain key distributor (DKD) 10 digitally signs the public key Pkbsr 38 using its secret key Skdkd 34. The electronic signature is a computed digest of the text that is encrypted and sent with the text message. The recipient decrypts the signature and recomputes the digest from the received text. If the digests match, the message is authenticated and proved to have originated from the sender. Because all routers in the domain, including routers 14, 16, and 50, all have the public key Pkdkd 36 of the domain key distributor DKD 10, they can decrypt the signature and ensure that they have received an untampered copy of Pkbsr 38. Furthermore, because only routers in the domain have public key Pkdkd 36 for decrypting the electronic signature of domain key distributor DKD 10, domain key distributor (DKD) 10 can send the result either through unicast or through the distribution tree itself (e.g. the "All-PIM-Routers" group), and be sure that only routers in the domain can verify the signature. In a different embodiment wherein confidentiality is needed, the domain key distributor (DKD) 10 can encrypt Pkbsr 38 rather than digitally signing it.

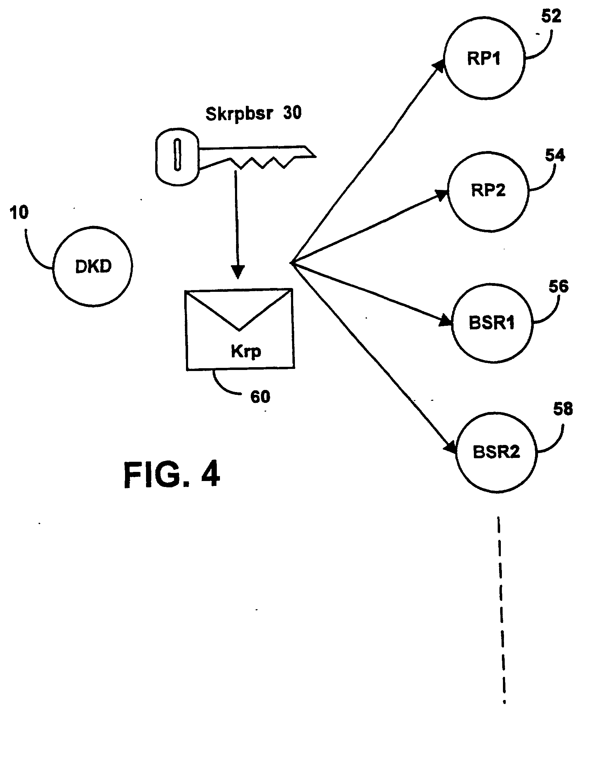

Referring to FIG. 4, dissemination of the rendez-vous point key "Krp" 60 to only bootstrap routers and rendez-vous points is done by using the management keys. Domain key distributor DKD 10 encrypts Krp 60 by using the secret key Skrpbsr 30, which is known only to the domain key distributor (DKD) 10. The resulting encryption or "ciphertext" is sent to all routers ("All-PIM-Routers" group) by multicasting to the domain. Because only bootstrap routers, such as bootstrap router BSR1 56 and bootstrap router BSR2 58, and rendez-vous points, such as RP1 52 and RP2 54, have the matching public key Pkrpbsr 32 through the configuration process, only they will be able to decipher the message to obtain the key Krp 60. All other routers in the domain will drop this message since they cannot decipher it and hence believe it to be unreadable.

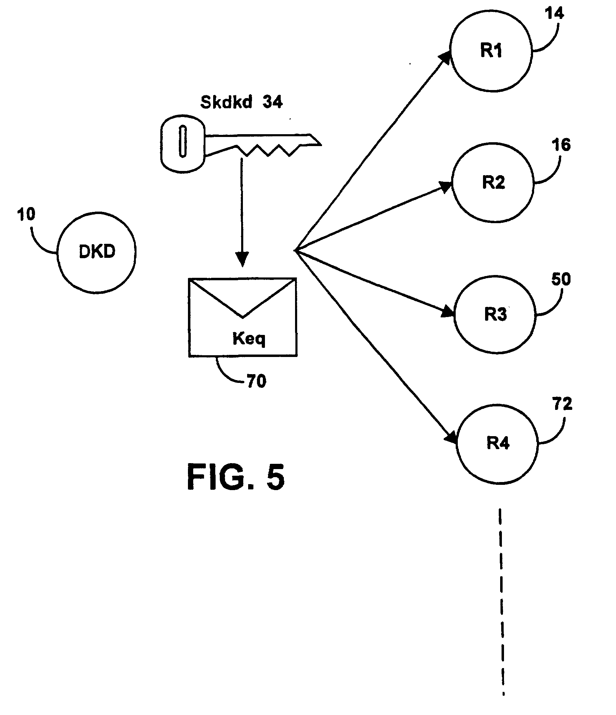

Referring to FIG. 5, dissemination of the equal opportunity key "Keq" 70 to all routers using the management key Skdkd 34 is shown. In this dissemination, domain key distributor DKD 10 encrypts the equal opportunity key Keq 70 using its secret key Skdkd 34 and sends the resulting ciphertext to all routers in the domain, either through unicast or through the distribution tree. Since Routers 14, 16, 50, 72 are in the domain and have the public key Pkdkd 36, they alone can decipher the ciphertext to obtain Keq 70. All other routers not in the domain and therefore not in possession of "Pkdkd" key 36 will drop this message as unreadable.

Since Krp 60 and Keq 70 keys are used frequently, these keys can be periodically rekeyed to fresh keys. For financial institutions such as commercial banks which require tightened security, Krp 60 and Keq 70 keys may be rekeyed on a very frequent basis e.g., weekly. For less sensitive applications, the keys may be rekeyed on a less frequent basis as determined by system administrator policy.

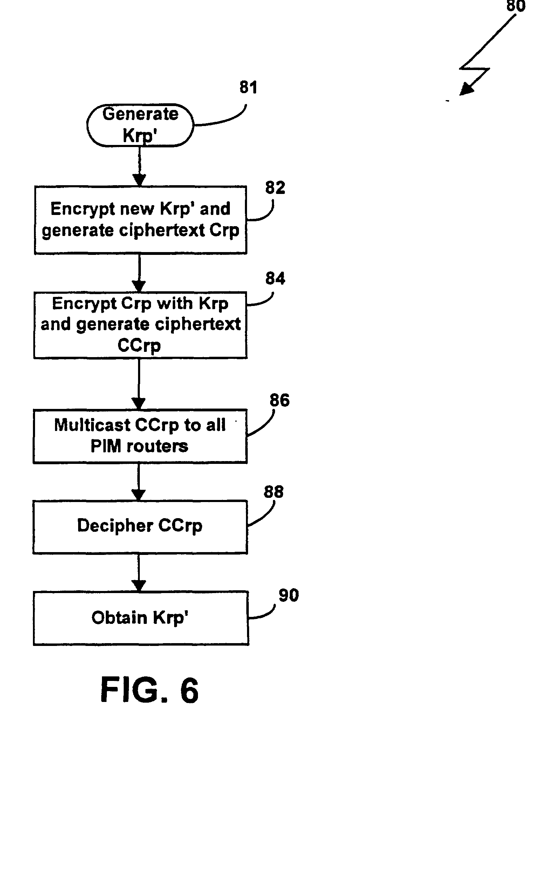

Referring to FIG. 6, an example of a process 80 that uses the management keys for redisseminating a rekeyed Krp, is shown. A domain key distributor DKD generates the new or rekeyed key "Krp'." The domain key distributor (DKD)10 encrypts in step 82 the key Krp' using the Skdkd key to produce what is referred to as a ciphertext Crp. The domain key distributor (DKD) 10 also encrypts in step 84 Crp with the existing key "Krp" resulting in ciphertext CCrp. The domain key distributor (DKD) 10 multicasts in step 86 the CCrp message to all routers in the domain. Because only bootstrap routers and rendez-vous points have the existing Krp key, only those routers will be able to decipher in step 88 the ciphertext CCrp and obtain in step 90 the new key Krp'. All other routers will discard the message. Alternatively, domain key distributor (DKD) 10 can unicast CCrp to each bootstrap router BSR and each rendez-vous point RP in the domain.

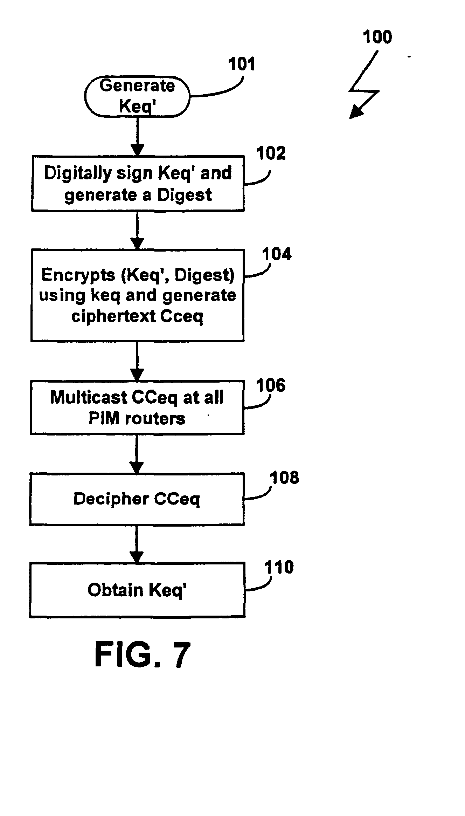

Referring to FIG. 7, an example of a process 100 that uses the management keys to redisseminate a rekeyed Keq, i.e., "Keg' " is shown. A domain key distributor DKD generates a rekeyed Keq, i.e., key "Keg' ". Domain key distributor DKD 10 digitally signs in step 102 the key "Keg' " using its private key "Skdkd" and generates a digest. The Domain key distributor (DKD) 10 encrypts in step 104 the new key "Keg' " and the digest using the existing Keq to generate a ciphertext CCeq. Domain key distributor DKD 10 multicasts in step 106 CCeq to all routers in the domain. Only routers holding the exiting Keq will be able to decipher in step 108 CCeq and obtain Keq'. All routers no in possession of existing Keq will drop the multicast message as unreadable.

The present invention has been described in terms of specific embodiments, which are illustrative of the invention and not to be construed as limiting. Other embodiments are within the scope of the following claims.

## Claims

1. A system for managing a plurality of keys within a domain for sender authentication, comprising:
a domain key distributor for producing the plurality of keys, including key management keys, a rendez-vous point key, and an equal opportunity key, within the domain;
a bootstrap router that receives the equal opportunity key and the rendez-vous point key from the domain key distributor through the key management keys; and
a rendez-vous point receiving the equal opportunity key and the rendez-vous point key from the domain key distributor through the key management keys, and sharing the rendez-vous point key with only the bootstrap router.

2. The system of claim 1, wherein the bootstrap router has a private key/public key pair (Skbsr, Pkbsr) and signs a bootstrap message by using the Skbsr key.

3. The system of claim 1, wherein the rendez-vous point advertises its candidacy to the bootstrap router by signing a bootstrap message with the rendez-vous point key.

4. The system of claim 1, wherein the rendez-vous point key and/or the equal opportunity key is rekeyed periodically.

5. The system of claim 1, wherein the rendez-vous point key is delivered to the bootstrap router and/or the rendez-vous point by the domain key distributor authenticating the rendez-vous point key with the management keys.

6. The system of claim 1, wherein the equal opportunity key is delivered to all routers in the domain by the domain key distributor authenticating the equal opportunity key with the management keys.

7. A system of keys, generated within a domain by a domain key distributor, for authenticating sender information, comprising:
a private key/public key pair (Pkbsr, Skbsr) with the Pkbsr key being delivered to all routers in the domain through a plurality of key management keys, and the Skbsr key being delivered only to a plurality of bootstrap routers;
a rendez-vous point key being delivered to a plurality of rendez-vous points and the plurality of bootstrap routers through the plurality of key management keys; and
an equal opportunity key being delivered to all routers in the domain through the plurality of key management keys.

8. The system of keys of claim 7, wherein the plurality of key management keys comprises a key pair of the domain key distributor (Pkdkd, Skdkd), and another key pair (Pkrpbsr, Skrpbsr) generated by the domain key distributor, Pkrpbsr being configured only into the plurality of rendez-vous points and the plurality of bootstrap routers.

9. The system of keys of claim 7, wherein the rendez-vous point key is rekeyed and redelivered to the plurality of rendez-vous points and the plurality of bootstrap routers through the plurality of key management keys.

10. The system of keys of claim 9, wherein the equal opportunity key is rekeyed and redelivered to all routers in the domain through the plurality of key management keys.

11. A method of managing and delivering a plurality of security keys in a domain comprises:
generating a plurality of management keys;
configuring the plurality of management keys into a plurality of domain entities; and
delivering the plurality of security keys by using the plurality of management keys.

12. The method of claim 11, wherein configuring the plurality of management keys is by manual configuration optionally with a flash card, or by on-line dynamic configuration.

13. The method of claim 11, wherein:
said management keys include a first public/private key pair (Pkdkd, Skdkd),and a second public/private key pair (Pkrpbsr, Skrpbsr);
the Pkdkd key is configured into all routers in the domain;
the key pair (Pkbsr, Skbsr) is configured into a plurality of bootstrap routers in the domain;
the Pkrpbsr key is configured into the plurality of bootstrap routers and a plurality of rendez-vous points in the domain;
a Pkbsr key of a third public/private key pair (Pkbsr, Skbsr) is delivered to all routers in the domain by using the Skdkd;
a rendez-vous point key is delivered to the plurality of bootstrap routers and rendez-vous point by using the Skrpbsr key; and
an Equal opportunity key is delivered to all routers in the domain by using the Skdkd key.

14. The method of claim 13, further comprising rekeying and redelivering the rendez-vous point key to the plurality of bootstrap routers and rendez-vous point on a periodic basis.

15. The method of claim 14, wherein the redelivering step further comprises:
generating a ciphertext Crp by encrypting a rekeyed rendez-vous point key with the Skdkd key;
generating a ciphertext CCrp by encrypting the Crp with the rendez-vous point key; and
sending the CCrp to all routers in the domain.

16. The method of claim 13, further comprising rekeying and redelivering the equal opportunity key to all routers in the domain on a periodic basis.

17. The method of claim 16, wherein the redelivering step comprises:
generating a digest for a rekeyed equal opportunity key with the Skdkd key;
generating a ciphertext CCeq by encrypting the rekeyed equal opportunity key and the digest with the equal opportunity key; and
sending the CCeq to all routers in the domain.

18. The method of claim 17, wherein sending the CCeq comprises unicasting the ciphertext CCeq to each of the routers.
